Europäisches Patentamt

(19) European Patent Office

Office européen des brevets

(11) EP 0 928 676 A1

## (12) EUROPEAN PATENT APPLICATION
published in accordance with Art. 158(3) EPC

(43) Date of publication:
14.07.1999 Bulletin 1999/28

(21) Application number: 98921839.1

(22) Date of filing: 27.05.1998

(51) Int. Cl.$^6$: **B29C 47/88**

(86) International application number:
PCT/JP98/02332

(87) International publication number:
WO 98/53976 (03.12.1998 Gazette 1998/48)

(84) Designated Contracting States:
AT BE CH CY DE DK ES FI FR GB GR IE IT LI LU
MC NL PT SE

(30) Priority: 27.05.1997 JP 15448997
27.05.1997 JP 15449097

(71) Applicant:
TORAY INDUSTRIES, INC.
Tokyo 103-8666 (JP)

(72) Inventors:
• TOYODA, Katsuya
Anpachi-gun, Gifu 503-2305 (JP)

• OKUBO, Kenichi
Shizuoka 411-0022 (JP)
• OKASHIRO, Hidetoshi,
785-28, Shinjo
Shiga 528-0007 (JP)

(74) Representative:
Bühling, Gerhard, Dipl.-Chem. et al
Patentanwaltsbüro
Tiedtke-Bühling-Kinne & Partner
Bavariaring 4
80336 München (DE)

### (54) METHOD AND APPARATUS FOR PRODUCING THERMOPLASTIC RESIN SHEET

(57)     A method for producing a thermoplastic resin sheet, by extruding a molten thermoplastic resin like a sheet from a die, and cooling and solidifying the sheet on a cooling drum according to the electrostatic charging method, comprising the use of a conductive tape,

(A) the section of which is formed almost like a rectangle with a thickness of X (mm) and a width of Y (mm) satisfying the following formulae (1) to (3)

$$0.01 \leqq x \leqq 0.5 \quad (1)$$

$$1 \leqq Y \leqq 10 \quad (2)$$

$$50 \leqq Y/X \leqq 1000 \quad (3)$$

(B) with a thickness variation Z of less than 30% in the longitudinal direction
as a charging electrode for casting. The method allows the production of a thermoplastic resin sheet excellent in thickness uniformity with few surface defects at a high speed of 65 m/min or higher, particularly 100 m/min or higher, more particularly 150 m/min or higher.

Fig. 1

EP 0 928 676 A1

Printed by Xerox (UK) Business Services
2.16.7/3.6

## Description

Technical Field

The present invention relates to a method and apparatus for producing a thermoplastic resin sheet.

In more detail, it relates to a method and apparatus for producing a thermoplastic sheet, which allows high speed molding of a thermoplastic resin sheet excellent in thickness uniformity with few surface defects.

Background Arts

As a conventional method for producing a thermoplastic resin sheet, it is widely known that an electrode is installed between a die and a cooling drum, across a molten resin extruded like a sheet from the slit of the die and that a high voltage is applied to the electrode for applying static charges to the molten resin, to keep the extruded molten resin in contact with the cooling drum, for solidification (e.g., Japanese Patent Publication (Kokoku) Nos. 37-6142 and 49-55759, etc.).

This method is usually called the electrostatic charging method and is effective for producing a thermoplastic resin sheet with a uniform thickness.

However, this method has limits. For example, if the revolving speed of the cooling drum is raised with an intention to increase the quantity of the thermoplastic resin sheet to be molded, an air stream is entrained to be caught between the thermoplastic resin sheet and the cooling drum, to prevent the molding of a thermoplastic resin sheet with a uniform thickness. Even if this does not happen, it can happen that the molten resin discharged from the die is heavily vibrated before it reaches the cooling drum, or that the molten resin reaches the cooling drum at different locations in the circumferential direction of the cooling drum, to increase the thickness variation.

Furthermore, if the contact between the molten resin and the cooling drum becomes weak, the molten resin cannot be cooled smoothly, and depending on the thermoplastic resin used, such problems often arise that the resin sheet is crystallized, that the clarity is impaired, that the stretchability is lowered, and so on.

The highest production speed at which a uniform sheet can be obtained without inconvenience according to the electrostatic charging method is 50 ~ 60 m/min though depending on the thermoplastic resin used.

Disclosure of the Invention

In view of the present situation as described above, a first object of the present invention is to provide a method for producing a thermoplastic resin sheet excellent in thickness uniformity with few surface defects at a higher speed.

A second object of the present invention is to provide an apparatus for producing a thermoplastic resin sheet excellent in thickness uniformity with few surface defects at a high speed.

According to the method and apparatus for producing a thermoplastic resin sheet of the present invention, a thermoplastic resin sheet excellent in thickness uniformity with few surface defects can be produced at a high speed of 65 m/min or more, particularly 100 m/min or more, more particularly 150 m/min or more by extruding a molten thermoplastic resin like a sheet from a die, and cooling and solidifying it on a cooling drum according to the electrostatic charging method.

Brief Description of the Drawings

Fig. 1 is a schematic drawing showing a general constitution of an apparatus for producing a thermoplastic resin sheet in which the present invention can be applied.

Fig. 2 is a schematic drawing showing an embodiment of the apparatus for producing a thermoplastic resin sheet of the present invention.

Fig. 3 is a partially expanded perspective view showing a configuration near the electrostatically charging electrode in the apparatus for producing a thermoplastic resin sheet shown in Fig. 1.

Fig. 4 is a schematic drawing showing an example of the moving directions of the electrostatically charging electrode in the method of the present invention.

Fig. 5 is a schematic drawing showing another example of the moving directions of the electrostatically charging electrode in the method of the present invention.

Fig. 6 is a graph showing the relation between the voltage Q of the DC high voltage supply connected to a conductive tape and the surface speed Vd of the cooling drum as a control example of the DC high voltage supply connected to the electrostatically charging electrode.

The Best Embodiments of the Invention

The method and apparatus for producing a thermoplastic resin sheet of the present invention is described below in detail.

The thermoplastic resins which can be used in the present invention include polyesters such as polyethylene terephthalate, polyethylene isophthalate, polyethylene-2,6-naphthalate, polybutylene terephthalate, poly-1,4-cyclohexanedimethylene terephthalate, and polyethylene $\alpha,\beta$-bis(2-chlorophenoxy)ethane-4,4-dicarboxylate, polyolefines such as polyethylene, polypropylene, polybutene and poly-4-methylpentene-1, polyamides such as nylon 6, nylon 66 and nylon 12, polyimides, polysulfones, polystyrenes, polyvinyls, polyester ethers, polycarbonates, polyester carbonates, polyether sulfones, polyether imides and polyphenylene sulfides.

One of these resins can be used, or two or more of them can also be used as a copolymer or mixture. Of course, the thermoplastic resin can contain other additives, for example, an antistatic agent, antiweathering agent, inorganic particles, organic particles, slip agent such as wax, pigment, etc.

The present invention is effective especially when the thermoplastic resin is a polyester, particularly when it contains mainly polyethylene terephthalate, polyethylene isophthalate or polyethylene-2,6-naphthalate. "Contains mainly" in this case means to contain 70 mol% or more of said polyester. One of polyesters can be used, or two or more of them can also be used as a copolymer. Furthermore, a mixture containing less than 30 mol% of other components can also be used.

The molten resin sheet extruded from a die can be a single layer of said thermoplastic resin or a multi-layer laminate.

In the present invention, various thermoplastic resin melting means and dies can be used.

For example, as for the melting means, chips can be supplied into a single-screw or twin-screw extruder, to be molten and extruded. Depending on the thermoplastic resin used such as a polyester or polyamide, it is necessary to sufficiently dry the chips before supplying them into an extruder. The molten and extruded thermoplastic resin is filtered by a filter, metered by a gear pump, and sent to a die, to be extruded. The die can be a die with a slit such as a T die, coat hanger die or fish tail die.

As a conventional means for producing a thermoplastic resin sheet at a higher speed according to the electrostatic charging method, it is generally practiced to bring the electrode closer to the molten thermoplastic resin sheet or to raise the applied voltage. However, if these methods are used excessively, spark discharge from the electrode to the molten thermoplastic resin occurs, and in an extreme case, a spark can go through the sheet to damage the sheet and the cooling drum. Furthermore, even if spark discharge does not occur, the thermoplastic resin sheet can be damaged on the electrode side, to be roughened on the surface like obscure glass, losing its value as a commercial product.

It is also generally practiced to adjust the position of the electrode in the circumferential direction of the cooling drum. If the position of the electrode is too far from the position where the molten sheet reaches the cooling drum, in the direction reverse to the rotating direction, the molten sheet is vibrated due to electric repulsion against the electrode. On the contrary, if the position of the electrode is too far from the position where the molten sheet reaches the cooling drum, in the rotating direction, it cannot be avoided that the entrained air stream is caught. Since these prevent smooth electrostatic charging, it is preferable for achieving a higher speed that the electrode is positioned near the position where the molten sheet reaches the cooling drum. It is generally practiced to use a wire electrode circular in section as the electrode, but if such an electrode is used, the molding speed is 50 to 60 m/min at the highest even if the above means are used under optimum conditions.

The inventors studied intensively, and as a result, found that if an electrode with a specific form is used, production at a higher speed can be achieved. In the present invention, it is important that the electrode is a conductive tape,

(A) the section of which is formed almost like a rectangle with a thickness of X (mm) and a width of Y (mm) satisfying the following formulae (1) to (3)

$$0.01 \leqq X \leqq 0.5 \tag{1}$$

$$1 \leqq Y \leqq 10 \tag{2}$$

$$50 \leqq Y/X \leqq 1000 \tag{3}$$

(B) with a thickness variation Z of less than 30% in the longitudinal direction.

It is important that the conductive tape used in the present invention is almost rectangular in section and have a thickness X of 0.01 mm to 0.5 mm. If X is thinner than 0.01 mm, spark discharge easily occurs, and the conductive tape is likely to be broken due to corrosion unpreferably when used as an electrode. On the contrary, if X is thicker than 0.5 mm, a high application force cannot be obtained, and high speed production of the thermoplastic resin sheet cannot be achieved unpreferably. A preferable range of X is 0.01 mm to 0.3 mm, and a more preferable range is 0.01 mm to 0.05 mm.

It is important that the conductive tape used in the present invention has a width Y of 1 mm to 10 mm. If Y is more narrow than 1 mm, a high application force cannot be obtained, not allowing the high speed production of the thermoplastic resin sheet to be achieved, and the electrode is twisted to such an extent that electrostatic charging becomes uneven in the transverse direction unpreferably. The inventors found that if Y is wider than 10 mm on the contrary, the charging becomes unstable to cause spark discharge even with slight variation unpreferably. A preferable range of Y is 2 mm to 9 mm, and a more preferable range is 3 mm to 8 mm.

Furthermore, it is important that the relation between the thickness X and the width Y of the conductive tape used in the present invention is 50 to 1000 in Y/X. If Y/X is less than 50, electrostatic charging becomes unstable, to easily cause spark discharge from the electrode even with slight variation in the voltage applied to the electrode and in the delivery of the thermoplastic resin the die. If Y/X is larger than 1000 on the contrary, the application force becomes small, making it difficult to raise the molding speed. A preferable range of Y/X is $70 \leqq Y/X \leqq 800$, and a more preferable range is $100 \leqq Y/X \leqq 500$.

Moreover, it is important that the thickness variation Z of the conductive tape used in the present invention in the longitudinal direction is less than 30%. If Z exceeds 30%, discharge can occur partially in the thermoplastic resin sheet at thin portions of the electrode, to cause surface defects, and as the case may be, the sheet may be holed unpreferably. A preferable range of Z is 25% or less, and a more preferable range is 20% or less.

The method of the present invention can preferably achieve an excellent effect that a thermoplastic resin sheet excellent in thickness uniformity with few surface defects can be produced even when the surface speed of the cooling drum used for casting is as high as 65 m/min or more. Furthermore, the method of the present invention can achieve an excellent effect that a thermoplastic resin sheet excellent in thickness uniformity with few surface effects can be produced even when the surface speed of the cooling drum used for casting is as high as 100 m/min. So, the present invention is more suitable for such high speed processing. The inventors found that the method of the present invention even allows the production at a high cooling drum surface speed of 150 m/min or more.

In the method of the present invention, it is preferable to apply a tensile stress corresponding to 10% to 90% of the breaking strength of the conductive tape to the conductive tape. If the tensile stress is less than 10% of the breaking strength, the electrode is heavily vibrated, and smooth electrostatic charging may not be able to be effected unpreferably. Furthermore, when the conductive tape is used for a long time as an electrode for electrostatic charging, the electrode surface may be unpreferably microscopically changed due to the corrosion of the electrode or the deposition of monomers and oligomer sublimed from the molten thermoplastic resin, and the electrode may keep emitting violet light wholly or partially as glow discharge unpreferably inconveniently.

The inventors studied these phenomena, and as a result, found that the continuous glow discharge is caused by very slight and whole or partial vibration of the electrode, and that for preventing the phenomena, it is effective to apply a tensile stress corresponding to 10% or more of the breaking strength of the conductive tape to the conductive tape On the contrary, if the tensile stress is larger than 90% of the breaking strength, the electrode is remarkably deformed partially or wholly, not allowing smooth electrostatic charging, and as the case may be, the electrode may be broken unpreferably. A preferable tensile stress range is 15% to 80% of the breaking strength, and a more preferable range is 20% to 70% of the breaking strength.

It is also preferable that the conductive tape used in the present invention is continuously moved in the longitudinal direction for preventing the generation of glow discharge when the thermoplastic resin sheet is molded. It is preferable for inhibition of glow discharge that the moving speed Vt is in the following range:

$$Vt \leqq Vd/50000$$

where Vd is the revolving speed of the cooling drum. The reason is considered to be that the continuous movement can inhibit the whole or partial slight vibration of the electrode.

The continuous movement of the conductive tape is also desirable in view of removing the causes of spark discharge due to the corrosion of the electrode and the deposition of monomers and oligomer.

A preferable Vt range is:

$$Vt \geqq Vd/30000$$

and a more preferable range is

$$Vt \geqq Vd/10000$$

4

For moving the conductive tape, for example, while the reel with the electrode wound around it is controlled in torque by Permatorque produced by Shinnippon Sozai K.K. or Hysteresis Clutch/Brake produced by Shinkodenki K.K. etc., the other reel is rotated by a motor for winding, to move the conductive tape.

In the method of the present invention, it is preferable in view of stable electrostatic charging that the voltage applied to the conductive tape is positive. If the applied voltage is a negative DC voltage, the conductive tape may be finely flawed, burred or corroded, etc. at the edge faces, being likely to cause spark discharge unpreferably. Also when the applied voltage is an AC voltage, the same phenomena occur unpreferably when the electrode is of negative polarity.

In the present invention, it is essential that the conductive tape is arranged so that either of the edges of conductive tape faces the thermoplastic resin. That is, if the sharp edge of the conductive tape is effectively used, the electric field around the electrode becomes strong, and a powerful application force can be obtained.

The inventors found that there is a close relation among the distance P (mm) in the normal direction between the bottom end of the conductive tape and the thermoplastic resin sheet on the cooling drum, the surface speed Vd (m/min) of the cooling drum and the voltage Q (kV) of the DC high voltage supply connected to the conductive tape, and that if the following formula is respected for control

$$Q = a \times P \times Vd + b$$

where $0.005 \leqq a \leqq 0.04$, $0 \leqq b \leqq 7$ then a high quality sheet can be efficiently produced. More preferable ranges of a and b are $0.01 \leqq a \leqq 0.03$ and $0 \leqq b \leqq 5$.

In actual production, if the distance P in the normal direction between the bottom end of the conductive tape and the thermoplastic resin sheet on the cooling drum is kept constant, the voltage Q of the DC high voltage supply connected to the conductive tape and the surface speed Vd of the cooling drum can be simply decided, and as a result, even when the surface speed of the cooling drum gradually increases as in the start of actual production, the voltage Q can be always set at the optimum value. So, the control is very easy.

If the distance P in the normal direction between the bottom end of the conductive tape and the thermoplastic resin sheet on the cooling drum is 1 mm to 20 mm, more preferably 2 mm to 12 mm, the static charges generated from the conductive tape can be efficiently applied to the thermoplastic resin sheet, and as a result, the Coulomb force becomes large, to allow high speed operation of the cooling drum.

The inventors found that if the voltage Q of the DC high voltage supply connected to the conductive tape is 1 kV to less than 30 kV, more preferably 5 kV to less than 15 kV, stable production can be effected without forming any defects in the sheet. In this case, if a resistance is added to the circuit, the above appropriate voltage range becomes higher due to the relation of voltage = current x resistance, needless to say.

If the direction in which the angle θ formed between the normal direction of the cooling drum and the conductive tape inclines toward the non-die side in reference to the normal direction of the cooling drum is defined as plus direction and the direction in which the angle θ inclines toward the die side is defined as minus direction, then keeping the angle θ in a range of -45° and +45° by a rotating device capable of adjusting the angle arbitrarily allows static charges to be efficiently applied to the conductive tape. So, the cooling drum can be rotated at a high speed, and in addition, the conductive tape can be minimized in the vibration caused during electrostatic charging. As a result, the thickness variation of the thermoplastic resin sheet can be minimized.

Furthermore, if the torsional angle Δθ (°) of the conductive tape is within ±7.5° in reference to the transverse direction of the die, the static charges supplied from the conductive tape become uniform in the entire width of the thermoplastic resin sheet, and moreover, the variation in the vibration of the conductive tape can be reduced. So, both productivity and quality can be improved simultaneously.

It is preferable that the thickness of the thermoplastic resin sheet obtained in the present invention is 0.05 mm to 2 mm. If the thickness of the thermoplastic resin sheet is smaller than 0.05 mm, spark discharge is likely to occur, and if larger than 2 mm on the contrary, sufficient contact force to the cooling drum cannot be obtained unpreferably. A preferable thickness range of the thermoplastic resin sheet is 0.07 mm to 1 mm, and a more preferable range is 0.1 mm to 0.5 mm.

In the present invention, it is preferable that a polyester is used as the thermoplastic resin, since the polyester can be effectively brought into contact with the cooling drum by the conductive tape, to greatly improve productivity and quality.

Furthermore, it is also preferable that the thermoplastic resin sheet obtained in the present invention is biaxially stretched and heat-treated into a biaxially oriented film.

The biaxially stretching and heat-treating method is not especially limited. In the so-called sequential biaxially stretching method as a typical method, the thermoplastic resin is heated to higher than the glass transition temperature, stretched in the machine direction in one step or in a plurality of steps between drawing rolls different in speed, and cooled, and the longitudinally stretched film is laterally stretched and heat-treated by a tenter which drives the film to travel while holding the edges of the film by clips.

The materials which can be used as the conductive tape electrode of the present invention include metals such as stainless steel, titanium, beryllium copper, palladium, Permalloy, tantalum, gold, platinum, silver, copper, brass, iron, tin, phosphor bronze, red brass, nickel silver, aluminum, aluminum alloy, nickel, niobium, zinc, molybdenum and tungsten, carbon, etc. Any of these materials can be used as it is, or as the case may be, any of these materials can be polished or treated on the surface by plating, vapor deposition or sputtering, etc. for use as the electrode.

In the present invention, it is preferable to use a material with an electric specific resistance of 10 $\mu \Omega$ · cm to 130 $\mu \Omega$ · cm among the above materials, as the conductive tape. The metals usually used as electrodes are mostly less than 10 $\mu \Omega$ · cm in electric specific resistance, and metals more excellent in electric conductivity manifest more excellent performance as electrodes, needless to say. However, as a result of various examinations, the inventors found that as an electrode used for a special area of casting a thermoplastic resin under electrostatic charging, a material with a lower electric conductivity can exhibit more excellent performance than a material with a higher electric conductivity. That is, if the electric specific resistance of the electrode is less than 10 $\mu \Omega$ · cm, spark discharge is likely to occur, and it may be difficult to raise the production speed. If the electric specific resistance is 10 $\mu \Omega$ · cm or more, spark discharge is unlikely to occur, and the production speed can be raised. If the electric specific resistance of the electrode is more than 130 $\mu \Omega$ · cm on the contrary, the capability of electrostatic charging declines unpreferably.

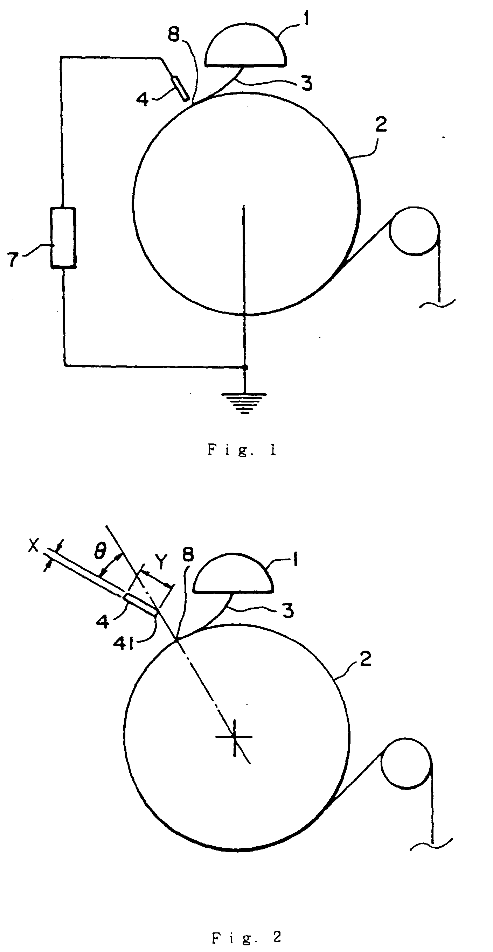

Fig. 1 shows a general constitution of the apparatus for producing a thermoplastic resin sheet of the present invention.

In Fig. 1, a thermoplastic resin sheet supplied from an extruder not illustrated is widened in the transverse direction by a die 1, and delivered as a thermoplastic resin sheet 3. The thermoplastic resin sheet 3 reaches a cooling drum 2, to be quickly cooled. Near the position 8 where the thermoplastic resin sheet 3 reaches the cooling drum 2, a conductive tape is provided as an electrostatically charging electrode 4. The reached position 8 is different, depending on the relative position between the die 1 and the cooling drum 2, the thickness of the thermoplastic resin sheet 3 and the surface speed of the cooling drum 2. The conductive tape as the electrostatically charging electrode 4 is connected with a DC high voltage supply 7, and if a DC high voltage is applied to the electrostatically charging electrode 4, the static charges generated by the electrostatically charging electrode 4 are applied to the thermoplastic resin sheet 3, and their Coulomb force causes the thermoplastic resin sheet 3 to contact the cooling drum 2.

Fig. 2 shows an embodiment of the present invention.

The bottom end 41, i.e., the edge on the cooling drum 2 side, of the conductive tape provided as the electrostatically charging electrode 4 must be near the reached position 8. If the bottom end 41 is on the die 1 side in reference to the reached position 8, the Coulomb force of the static charges applied to the thermoplastic resin sheet before the thermoplastic resin sheet reaches the cooling drum acts to let the thermoplastic resin sheet contact the cooling drum 2. So, the reached position 8 is changed, and as a result, the sheet becomes uneven in thickness. On the other hand, if the bottom end 41 is on the non-die side in reference to the reached position 8, the Coulomb force at the reached position 8 is decreased, causing air to be caught at the predetermined reached position 8, forming defects like air bubbles.

Furthermore, if the distance P in the normal direction between the bottom end 41 of the conductive tape provided as the electrostatically charging electrode 4 and the thermoplastic resin sheet on the cooling drum is too large, static charges cannot be sufficiently applied to the thermoplastic resin sheet near the reached position 8, and defects like air bubbles are formed as in the above case. On the contrary, if the distance P is too small, the dielectric breakdown of the thermoplastic resin sheet is likely to be caused for forming defects like pin holes. Furthermore, due to a slight change in the reached position 8, as described before, the thermoplastic resin sheet can contact the electrostatically charging electrode 4, to inconvenience production.

Moreover, the angle θ formed between the normal direction of the cooling drum 2 and the electrostatically charging electrode 4 must be adjusted appropriately, to efficiently apply the static charges generated from the electrostatically charging electrode 4 to the thermoplastic resin sheet 8 near the reached position 8.

For the reasons stated above, it is very important that the conductive tape provided as the electrostatically charging electrode 4 can be moved to an arbitrary position in reference to the cooling drum 2, and therefore, the electrostatically charging electrode 4 must be able to be moved at least in two axial directions in reference to the cooling drum 2. Furthermore, it is very preferable that the angle θ formed between the normal direction of the cooling drum 2 and the electrostatically charging electrode 4 can be always appropriately adjusted when the reached position 8 is changed due to changes of production conditions.

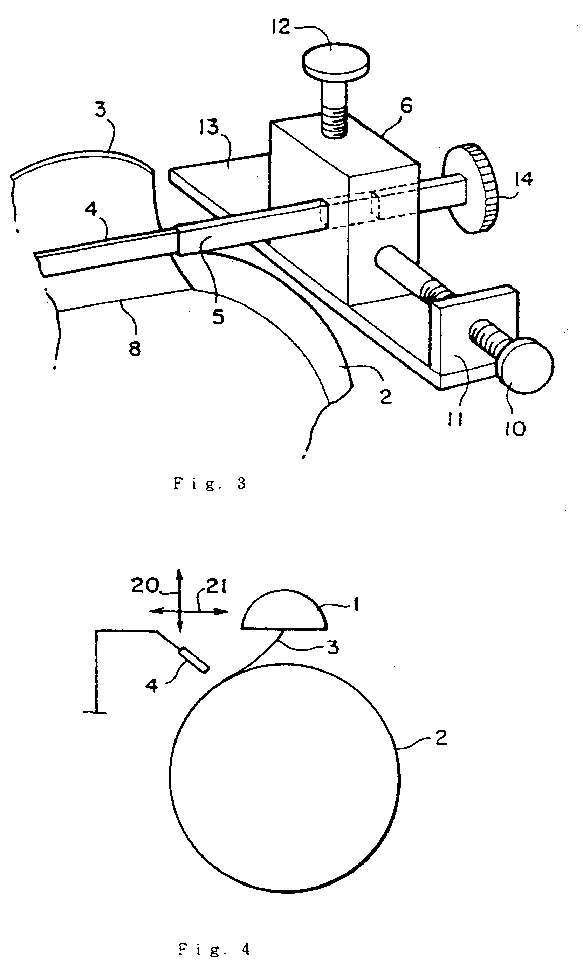

Another embodiment of the present invention is shown in Fig. 3.

Respectively at both the ends of the electrostatically charging electrode 4, outside the thermoplastic resin sheet 3 in the transverse direction, the electrostatically charging electrode 4 is generally covered with an insulating member 5 to avoid the discharge onto the cooling drum 2, and the end of the insulating member 5 is protected by a support 6. The support 6 can move on a fixed base 13, and in the embodiment shown in Fig. 3, a bolt 10 is used as a moving means. If the bolt is rotated, the support 6 can be moved in the horizontal direction with a stay 11 as a fulcrum. Furthermore, as another moving means, a bolt 12 is used, and if the bolt 12 is rotated, the support 6 can be moved in the direction perpendicular to the fixed base 13. The bolts 10 and 11 are the means for moving the electrostatically charging electrode 4 in at least two axial directions of the present invention Furthermore, at both the ends of the electrostatically charging electrode 4, rotating devices 14 are provided, so that the angle θ formed between the normal direction of the cooling drum 2 and the electrostatically charging electrode 4 can be appropriately adjusted.

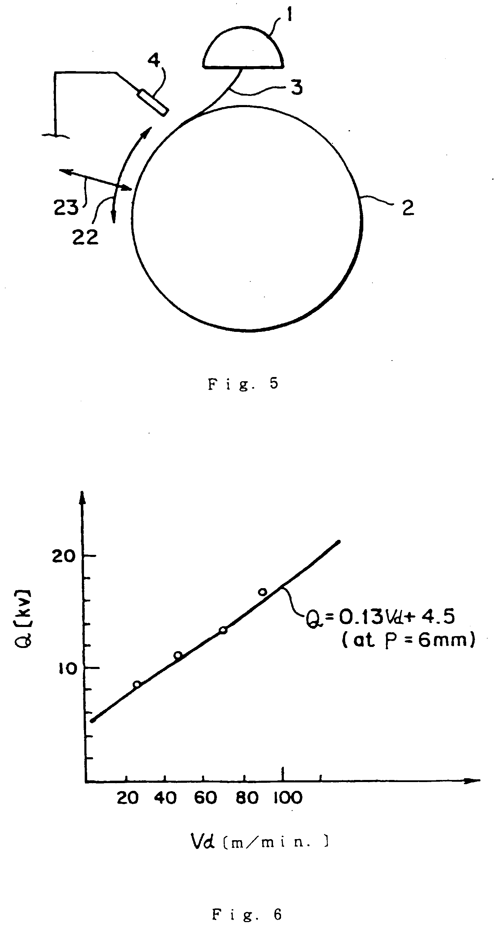

In this embodiment, as the moving directions of the electrostatically charging electrode 4, as shown in Fig. 4, the moving direction by the moving means 10 corresponds to the horizontal direction 21, and the moving direction by the moving means 12 corresponds to the vertical direction 20. However, as shown in Fig. 5, it is more preferable that the moving direction by the moving means 10 corresponds to the circumferential direction 22 of the cooling drum and that the moving direction by the moving means 12 corresponds to the normal direction 23 of the cooling drum 2. In this case, when the electrostatically charging electrode 4 is moved in response to the reached position 8, the distance P in the normal direction between the bottom end 41 of the electrostatically charging electrode 4 and the thermoplastic resin sheet 3 on the cooling drum 2 can be kept constant during adjustment. So, the desired adjustment can be achieved in a short time very accurately, to assure excellent operation convenience in production.

[Methods for evaluating physical property values and effects]

(1) Thickness variation of conductive tape and thermoplastic resin sheet

Film thickness tester KG601A and electronic micrometer K306C produced by Anritsu are used to continuously measure the thicknesses (maximum value Ta, minimum value Tb and average value Tc) for a length of 10 m in the longitudinal direction, and the thickness variation (%) is calculated from the following formula:

$$\text{Thickness variation} = (Ta - Tb)/Tc \times 100$$

(2) Breaking strength of conductive tape

A conductive tape is cut at a sample length of 150 mm, and pulled by an Instron type tensile tester at an interchuck distance of 100 mm at a tensile speed of 300 mm/min. From the obtained stress-strain curve, the breaking strength is obtained.

(3) Tensile stress of conductive tape

A conductive tape with a length of L (mm) is pulled at the center by a certain length of x (mm) in the direction perpendicular to the direction in which the conductive tape is pulled, and the load F at the time of pulling is read. From the following formula, tension T (N) is obtained.

$$T = FL/4x$$

The obtained tension is divided by the sectional area of the conductive tape, to obtain the tension (GPa) per unit sectional area.

(4) Electric specific resistance of conductive tape

The resistance R (Ω) of a conductive tape with a length of L (cm) and a sectional area of S ($cm^2$) is measured, and the electric specific resistance (Ω · cm) is obtained from the following formula:

$$\text{Electric specific resistance} = R \times S/L$$

The resistance R is measured at 20° C.

(5) Measurement of melt specific resistance

Sufficiently dried pellets are molten in nitrogen atmosphere at 280° C, and a pair of electrodes are inserted. A voltage is applied by a DC high voltage generator. The melt specific resistance (Ω · cm) is calculated from the following formula:

Melt specific resistance = V x S/(I x D)

where V is the applied voltage (V); I, the measured current (A); D, the distance between the electrodes (cm); and S, the area of the electrodes ($cm^2$).

(6) The highest molding speed of thermoplastic resin sheet

The obtained thermoplastic resin sheet or molded state is observed, for classification into any of the following four ranks;

◎: No defect at all on the film surface

○: Defects like thin specks were partially formed on the film surface.

△: Defects like specks were generated on the entire surface.

X: Large bubbles were caught between the thermoplastic resin and the cooling drum, to extremely degrade the flatness of the sheet.

The revolving speed of the cooling drum is raised from a low speed, and the highest speed at which a range of ◎ ~ ○ can be kept is identified as the highest molding speed of the thermoplastic resin sheet. In this case, the electrode is moved in the circumferential direction of the cooling drum about the reached position of the thermoplastic resin, to obtain a position at which defects become least.

Examples

The present invention is described below based on examples.

Examples 1 to 7

Pellets of polyethylene terephthalate (PET) with a melt specific resistance of $5 \times 10^8 \ \Omega \cdot$ cm were dried in vacuum at 180° C for 4 hours, supplied into an extruder, molten at 280° C, filtered by a filter, delivered from a T die and cast on a cooling drum with a diameter of 1200 mm with a surface temperature of 25° C under the following condition according to the electrostatic charging method.

(1) Electrostatically charging electrode

A. Material: As stated in Table 1.
B. Form: A tape rectangular in section as stated in Table 1.
C. Thickness variation: As stated in Table 1.
D. Breaking strength: As stated in Table 1.
E. Electric specific resistance: As stated in Table 1.

(2) Electrostatic charging conditions

A. Applied voltage: + DC voltage 14 kV
B. Tensile stress of electrode: As stated in Table 1.
C. Moving speed of electrode: As stated in Table 1.
D. Distance between molten thermoplastic resin sheet and bottom end of electrode: 5 mm
E. Angle formed between normal direction of cooling drum and conductive tape: +5°

The highest surface speed of the cooling drum obtained to keep the average thickness of the obtained sheet at 200 μ m while adjusting the quantity of the thermoplastic resin extruded was as shown in Table 1. In every example, a high speed could be achieved, and the thickness variation of the obtained thermoplastic resin sheet was small and

good.

EP 0 928 676 A1

Table 1

| | Electrostatically charging electrode | | | | | | | Electrostatic charging conditions | | | Highest surface speed (m/min) | Thickness variation of thermoplastic resin sheet (%) |
|---|---|---|---|---|---|---|---|---|---|---|---|---|
| | Material | Average thickness (X) (mm) | Width (Y) (mm) | Y/X | Thickness variation (%) | Breaking strength (GPa) | Electric specific resistance (μΩ·cm) | Applied voltage (kv) | Tensile stress (GPa) | Moving speed (m/min) | | |
| Example 1 | SUS304H | 0.040 | 8 | 200 | 10.0 | 1.28 | 72 | +14 | 0.90 | $5.0 \times 10^{-3}$ | 138 | 1.8 |
| Example 2 | SUS304H | 0.012 | 9 | 750 | 15.0 | 1.28 | 72 | +14 | 0.90 | $5.0 \times 10^{-3}$ | 135 | 1.5 |
| Example 3 | SUS304H | 0.10 | 6 | 60 | 8.0 | 1.30 | 72 | +14 | 0.90 | $5.0 \times 10^{-3}$ | 120 | 2.0 |
| Example 4 | SUS304H | 0.020 | 2 | 100 | 12.0 | 1.25 | 72 | +14 | 0.90 | $5.0 \times 10^{-3}$ | 115 | 2.2 |
| Example 5 | SUS304H | 0.040 | 8 | 200 | 25.0 | 1.26 | 72 | +14 | 0.90 | $5.0 \times 10^{-3}$ | 110 | 2.5 |
| Example 6 | SUS304H | 0.040 | 8 | 200 | 10.0 | 1.28 | 72 | +14 | 0.30 | $5.0 \times 10^{-3}$ | 107 | 3.2 |
| Example 7 | Titanium | 0.040 | 8 | 200 | 20.0 | 1.05 | 55 | +14 | 0.90 | $5.0 \times 10^{-3}$ | 125 | 2.0 |

Comparative Examples 1 and 2

Sheets were obtained according to the electrostatic charging method under the following conditions using the same thermoplastic resin and production apparatus as used in the above examples of the present invention.

(1) Electrostatically charging electrode

A. Material: Tungsten
B. Form: Wire circular in section

    Comparative Example 1: With a diameter of 0.10 mm
    Comparative Example 2: With a diameter of 0.15 mm

C. Breaking strength: As stated in Table 2.
D. Electric specific resistance: As stated in Table 2.

(2) Electrostatic charging conditions

A. Applied voltage: + DC voltage 14 kV
B. Tensile stress of electrode: As stated in Table 2.
C. Moving speed of electrode: As stated in Table 2.
D. Distance between molten thermoplastic resin sheet and electrode: 5 mm

The highest surface speed of the cooling drum obtained by keeping the average thickness of the obtained sheet at 200 $\mu$ m while adjusting the quantity of the thermoplastic resin extruded was as shown in Table 2. In either of the examples, higher speed could not be achieved, and the thickness variation of the obtained thermoplastic resin sheet was large.

Comparative Examples 3 to 12

Sheets were obtained by casting according to the electrostatic charging method under the following conditions using the same thermoplastic resin and production apparatus as used in the above comparative examples.

(1) Electrostatically charging electrode

A. Material: As stated in Table 2.
B. Form: Tape rectangular in section, as stated in Table 2.
C. Thickness variation: As stated in Table 2.
D. Breaking strength: As stated in Table 2.
E. Electric specific resistance: As stated in Table 2.

(2) Electrostatic charging conditions

A. Applied voltage: + DC voltage 14 kV
B. Tensile stress of electrode: As stated in Table 2.
C. Moving speed of electrode: As stated in Table 2.
D. Distance between molten thermoplastic resin sheet and bottom end of electrode: 5 mm
E. Angle formed between normal direction of cooling drum and conductive tape: +5°

The highest surface speed of the cooling drum obtained by keeping the average thickness of the obtained sheet at 200_m while adjusting the quantity of the thermoplastic resin extruded was as shown in Table 2. In any of the examples, higher speed could not be achieved, and the thickness variation of the obtained thermoplastic resin sheet was large.

Table 2

| | Material | Electrostatically charging electrode | | | | | | Electrostatic charging conditions | | | Highest surface speed (m/min) | Thickness variation of thermoplastic resin sheet (%) |
|---|---|---|---|---|---|---|---|---|---|---|---|---|
| | | Average thickness (X) (mm) | Width (Y) (mm) | Y/X | Thickness variation (%) | Breaking strength (GPa) | Electric specific resistance (μΩ·cm) | Applied voltage (kv) | Tensile stress (GPa) | Moving speed (m/min) | | |
| Comparative Exmaple 1 | Tungsten | 0.1mm φ | | | - | 2.80 | 5.7 | +14 | 2.00 | $5.0 \times 10^{-3}$ | 54 | 5.7 |
| Comparative Exmaple 2 | Tungsten | 0.15mm φ | | | - | 2.95 | 5.7 | +14 | 2.00 | $5.0 \times 10^{-3}$ | 50 | 6.2 |
| Comparative Exmaple 3 | SUS304H | 0.040 | 1.2 | 30 | 10.0 | 1.28 | 72 | +14 | 0.90 | $5.0 \times 10^{-3}$ | 62 | 5.4 |
| Comparative Exmaple 4 | SUS304H | 0.015 | 18 | 1200 | 15.0 | 1.25 | 72 | +14 | 0.90 | $5.0 \times 10^{-3}$ | 60 | 5.2 |
| Comparative Exmaple 5 | SUS304H | 0.008 | 16 | 2000 | 19.0 | 1.24 | 72 | +14 | 0.90 | $5.0 \times 10^{-3}$ | 49 | 12.3 |
| Comparative Exmaple 6 | SUS304H | 0.060 | 1.8 | 30 | 9.0 | 1.28 | 72 | +14 | 0.90 | $5.0 \times 10^{-3}$ | 54 | 10.1 |
| Comparative Exmaple 7 | SUS304H | 0.040 | 0.8 | 20 | 10.0 | 1.28 | 72 | +14 | 0.90 | $5.0 \times 10^{-3}$ | 56 | 9.7 |
| Comparative Exmaple 8 | SUS304H | 0.60 | 6 | 10 | 7.0 | 1.28 | 72 | +14 | 0.90 | $5.0 \times 10^{-3}$ | 57 | 7.5 |
| Comparative Exmaple 9 | SUS304H | 0.040 | 8 | 200 | 35.0 | 1.21 | 72 | +14 | 0.90 | $5.0 \times 10^{-3}$ | 62 | 15.0 |
| Comparative Exmaple 10 | SUS304H | 0.040 | 12 | 300 | 10.0 | 1.28 | 72 | +14 | 0.10 | $5.0 \times 10^{-3}$ | 65 | 27.0 |
| Comparative Exmaple 11 | SUS304H | 0.040 | 12 | 300 | 10.0 | 1.28 | 72 | +14 | 1.18 | $5.0 \times 10^{-3}$ | 67 | 14.3 |
| Comparative Exmaple 12 | Steel | 0.040 | 8 | 200 | 12.0 | 0.75 | 9.7 | +14 | 0.60 | $5.0 \times 10^{-3}$ | 69 | 5.7 |

Examples 8 to 13 and Comparative Examples 13 to 16

The distance P (mm) in the normal direction between the bottom end 41 of the conductive tape used as the electrostatically charging electrode 4 and the thermoplastic resin sheet 3 on the cooling drum 2, the surface speed Vd (m/min) of the cooling drum, the voltage Q of the DC high voltage supply 7 connected to the electrostatically charging electrode 4, the angle θ (° ) formed between the normal direction of the cooling drum 2 and the electrostatically charging electrode 4, and the torsional angle Δ θ (° ) of the electrostatically charging electrode 4 were set in conformity with the present invention as examples of the present invention, and were not set in conformity with the present invention as comparative examples, as shown in Table 3, for producing polyester resin sheets, to compare surface defects. The electrostatically charging electrode was made of SUS304H and had an average thickness of 0.040 mm, a width of 8 mm and a thickness variation of 10.0% in the longitudinal direction. The results are shown in Table 3.

As shown in Table 3, in Examples 8 to 13, the distance P was set in a range of 1 mm to 20 mm; the voltage Q, in a range of 1 kV to less than 30 kV; the angle θ , in a range of -45° to less than +45° ; and the torsional angle Δ θ, within 20° . So, the sheet surfaces were good without any defect. In Comparative Example 13, since the distance P was set at 22 mm, the application of static charges from the conductive tape was insufficient, and the sheet had defects like air bubbles. In Comparative Example 14, since the voltage was set at 33 kV through the distance P was set at 12 mm, the sheet had defects like pin holes due to dielectric breakdown. In Comparative Example 15, since the angle θ was set at -50° , the conductive tape used as the electrostatically charging electrode vibrated, and a result, the thickness accuracy of the sheet was lowered, while defects like air bubbles were also caused. In Comparative Example 16, since the torsional angle Δ θ was set at 12° , the contact between the thermoplastic resin sheet and the cooling drum became uneven in the transverse direction, and the high speed rotation test of the cooling drum was suspended. In this case, the conductive tape used as the electrostatically charging electrode also vibrated, to lower the thickness accuracy.

In Examples 8 and 13, the relation between the distance P and the surface speed Vd almost satisfied $Q = 0.22 \times P \times Vd + 4.5$ as shown in Fig. 6, and when the distance P was kept at 6 mm, the surface speed Vd and the voltage Q could be simply decided because of $Q = 0.13 \times Vd + 4.5$ , to allow easy control.

Table 3

| | P(mm) | Vd(m/min) | Q(kv) | $\theta$(°) | $\triangle\theta$(°) | Surface state of sheet |
|---|---|---|---|---|---|---|
| Example 8 | 6 | 31 | 8.5 | +10 | ±2.5 | Good |
| Example 9 | 6 | 48 | 11 | +10 | ±2.5 | Good |
| Example 10 | 6 | 72 | 13.5 | +10 | ±2.5 | Good |
| Example 11 | 6 | 93 | 16.5 | +10 | ±2.5 | Good |
| Example 12 | 8 | 75 | 15.5 | +10 | ±2.5 | Good |
| Example 13 | 10 | 72 | 17 | +10 | ±2.5 | Good |
| Comparative example 13 | 22 | - | 18 | +10 | ±2.5 | Defects like air bubbles occurred on sheet surface. |
| Comparative example 14 | 12 | - | 33 | +10 | ±2.5 | Pin holes were formed due to dielectric breakdown of sheet. |
| Comparative example 15 | 6 | - | 16 | −50 | ±2.5 | Electrostatically charging electrode vibrated and thickness accuracy of sheet declined. Furthermore defects like air bubbles occurred. |
| Comparative example 16 | 6 | - | 16 | +10 | ±12 | Electrostatically charging electrode vibrated and thickness accuracy of sheet declined. |

Note   P: Distance in the normal distance between the bottom end of the electrostatically charging electrode and the thermoplastic resin sheet on the cooling drum.

Vd: Surface speed of the cooling drum.

Q: Voltage of the DC high voltage supply connected to the electrostatically charging electrode

$\beta$: Angle formed between the normal direction of the cooling drum and the electrostatically charging electrode

$\triangle\theta$: Torsional angle of the electrostatically charging electrode in reference to the transverse direction of the die

EP 0 928 676 A1

Industrial Applicability

The method and apparatus of the present invention can be preferably used for producing a thermoplastic resin sheet, particularly a polyester film.

The method and apparatus of the present invention allows a thermoplastic resin sheet excellent in thickness uniformity with few surface defects to be molded at a higher speed in the film production industry of polyester films, etc., and can contribute to the improvement of film quality, improvement of film productivity and reduction of film cost.

## Claims

1. A method for producing a thermoplastic sheet, by extruding a molten thermoplastic resin like a sheet from a die, and cooling and solidifying the sheet on a cooling drum according to the electrostatic charging method, comprising the use of a conductive tape,

    (A) the section of which is formed almost like a rectangle with a thickness of X (mm) and a width of Y (mm) satisfying the following formulae (1) to (3)

$$0.01 \leqq x \leqq 0.5 \tag{1}$$

$$1 \leqq Y \leqq 10 \tag{2}$$

$$50 \leqq Y/X \leqq 1000 \tag{3}$$

    (B) with a thickness variation Z of less than 30% in the longitudinal direction
    as a charging electrode for casting.

2. A method for producing a thermoplastic resin sheet, according to claim 1, wherein the thickness X (mm) satisfies the following formula (4):

$$0\ 01 \leqq X \leqq 0.05 \tag{4}$$

3. A method for producing a thermoplastic resin sheet, according to claim 1 or 2, wherein the following production condition is added for casting;

    (C) Casting at a cooling drum surface speed of 65 m/min or more.

4. A method for producing a thermoplastic resin sheet, according to any one of claims 1 through 3, wherein the cooling drum surface speed is 100 m/min or more.

5. A method for producing a thermoplastic resin sheet, by extruding a molten thermoplastic resin like a sheet from a die and cooling and solidifying the sheet on a cooling drum according to the electrostatic charging method, comprising the steps of

    (A) using a conductive tape, the section of which is almost formed like a rectangle with a thickness of X (mm) and a width of Y (mm) satisfying the following formula:

$$50 \leqq Y/X \leqq 1000$$

    and which has a uniform constitution in the longitudinal direction,
    as a charging electrode, and
    (B) applying a tensile stress corresponding to 10% to 90% of the breaking strength of the conductive tape to the conductive tape.

6. A method for producing a thermoplastic resin sheet, according to claim 5, wherein the thickness X (mm) of the conductive tape is 0.015 mm to 0.3 mm.

7. A method for producing a thermoplastic resin sheet, according to claim 5 or 6, wherein the width Y (mm) of the conductive tape is 1 mm to 20 mm.

**8.** A method for producing a thermoplastic resin sheet, according to any one of claims 5 through 7, wherein the thickness variation Z of the conductive tape in the longitudinal direction is 30% or less.

**9.** A method for producing a thermoplastic resin sheet, according to any one of claims 5 through 8, wherein casting is effected at a cooling drum surface speed of 65 m/min or more.

**10.** A method for producing a thermoplastic resin sheet, according to any one of claims 5 through 9, wherein casting is effected at a cooling drum surface speed of 100 m/min or more.

**11.** A method for producing a thermoplastic resin sheet, according to any one of claim 5 through 10, wherein casting is effected while the conductive tape is continuously moved in the longitudinal direction, under a condition that the relation between the moving speed Vt (m/min) of the conductive tape and the cooling drum surface speed Vd (m/min) satisfies the following formula:

$$Vt \geqq Vd/50000$$

**12.** A method for producing a thermoplastic resin sheet, according to any one of claims 5 through 11, wherein a positive DC voltage is applied to the conductive tape and the cooling drum is grounded.

**13.** A method for producing a thermoplastic resin sheet, according to any one of claims 5 though 12, wherein the distance between the conductive tape and the cooling drum and the voltage of the DC high voltage power supply connected to the conductive tape are controlled to satisfy the following formula:

$$Q = a \times P \times Vd + b$$

where P is the distance (mm) in the normal direction between the edge of the conductive tape on the cooling drum side and the thermoplastic resin sheet on the cooling drum; Vd is the cooling drum surface speed (m/min); Q is the voltage (kV) of the DC high voltage power supply connected to the conductive tape; and a and b satisfy the following relations:

$$0.005 \leqq a \leqq 0.04$$

$$0 \leqq b \leqq 7$$

**14.** A method for producing a thermoplastic resin sheet, according to any one of claims 5 through 13, wherein the voltage Q of the DC high voltage power supply connected to the conductive tape is 1 kV to less than 30 kV.

**15.** A method for producing a thermoplastic resin sheet, according to any one of claims 5 through 14, wherein the position of the conductive tape in reference to the cooling drum is adjusted at least in two directions, i.e., the machine direction and the transverse direction of the film; the distance between the conductive tape and the cooling drum is adjusted in a range of 1 to 20 mm; the angle between the conductive tape and the normal direction of the cooling drum is adjusted in a range of 0 to 45° ; and the torsional angle of the conductive tape in reference to the transverse direction of the die is adjusted in a range of $\pm 7.5°$ , for casting.

**16.** A method for producing a thermoplastic resin sheet, according to any one of claims 5 through 15, wherein the thickness of the thermoplastic resin sheet is 0.05 mm to 2 mm.

**17.** A method for producing a thermoplastic resin sheet, according to any one of claims 5 through 16, wherein the thermoplastic resin is a polyester.

**18.** An apparatus for producing a thermoplastic resin sheet at a high speed, by extruding a molten thermoplastic resin like a sheet from a die and cooling and solidifying the sheet on a cooling drum according to the electrostatic charging method, comprising a conductive tape satisfying the following formulae (1) through (4) provided between the die and the cooling drum:

$$0.01 \leqq X \leqq 0.5 \tag{1}$$

$$1 \leqq Y \leqq 10 \tag{2}$$

$$50 \leqq X/Y \leqq 1000 \tag{3}$$

$$0 \leqq Z \leqq 30 \tag{4}$$

where

X: Thickness of the conductive tape (mm)
Y: Width of the conductive tape (mm)
Z: Thickness variation of the conductive tape in the longitudinal direction (%)

19. An apparatus for producing a thermoplastic resin sheet at a high speed, according to claim 18, wherein the thickness variation Z (%) of the conductive tape in the longitudinal direction is 0% to 25%.

20. An apparatus for producing a thermoplastic resin sheet at a high speed, according to claim 18 or 19, wherein the electric specific resistance of the conductive tape is 10 to 130 $\mu \Omega \cdot$ cm.

21. An apparatus for producing a thermoplastic resin sheet, in which a thermoplastic resin extruded like a sheet from a die is brought into contact with a cooling rotating body by a blade-like electrostatically charging electrode for cooling and solidifying it, comprising a means capable of moving said blade-like electrostatically charging electrode at least in two directions in reference to the rotating cooling body, so that the distance in the normal direction of the cooling rotating body between the edge of the blade-like electrostatically charging electrode on the cooling rotating body side and the thermoplastic resin sheet on the cooling rotating body can be adjusted at an arbitrary position on the cooling rotating body, and a rotating means capable of arbitrarily adjusting the angle formed between the normal direction of the cooling rotating body and the blade-like electrostatically charging electrode.

22. An apparatus for producing a thermoplastic resin sheet, according to claim 21, wherein an angle adjusting means is further provided to allow the torsional angle of the conductive tape to be adjusted at an arbitrary angle in reference to the transverse direction of the die.

23. An apparatus for producing a thermoplastic resin sheet, according to claim 21 or 22, wherein the rotating means can adjust the angle formed between the normal direction of the cooling rotating body and the blade-like electrostatically charging electrode in a range of 0° to less than 45° .

24. An apparatus for producing a thermoplastic resin sheet, according to claim 22 or 23, wherein the torsional angle adjusting means can adjust the torsional angle of the conductive tape in a range of within ±7.5° in reference to the transverse direction of the die.

25. An apparatus for producing a thermoplastic resin sheet, according to any one of claims 18 through 24, wherein the thickness of the thermoplastic resin sheet is 0.05 mm to 2 mm.

26. An apparatus for producing a thermoplastic resin sheet, according to any one of claims 18 through 25, wherein the thermoplastic resin is a polyester.

Fig. 1

Fig. 2

Fig. 3

Fig. 4

Fig. 5

Fig. 6

$Q = 0.13 Vd + 4.5$
( at $P = 6mm$ )

$Q$ [kv]

$Vd$ (m/min.)

# INTERNATIONAL SEARCH REPORT

| | International application No. |
|---|---|
| | PCT/JP98/02332 |

**A. CLASSIFICATION OF SUBJECT MATTER**
Int.Cl⁶ B29C47/88

According to International Patent Classification (IPC) or to both national classification and IPC

**B. FIELDS SEARCHED**

Minimum documentation searched (classification system followed by classification symbols)
Int.Cl⁶ B29C47/88

Documentation searched other than minimum documentation to the extent that such documents are included in the fields searched
Jitsuyo Shinan Toroku Koho   1996-1998   Kokai Jitsuyo Shinan Koho   1971-1998
Jitsuyo Shinan Koho          1926-1996   Toroku Jitsuyo Shinan Koho   1994-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 8-32426, B2 (Daifoil Hoechst Co., Ltd.),<br>March 29, 1996 (29. 03. 96),<br>Claims ; Fig. 2 (Family: none) | 1-4, 18-20<br>5-17 |
| Y | JP, 3-46297, B2 (Teijin Ltd.),<br>July 15, 1991 (15. 07. 91),<br>Claims ; column 3, lines 20 to 22 (Family: none) | 5-17 |
| A | JP, 57-8116, A (Teijin Ltd.),<br>January 16, 1982 (16. 01. 82),<br>Claims ; Fig. 3 (Family: none) | 21-26 |
| A | JP, 2583275, B2 (Mitsubishi Chemical Corp.),<br>November 21, 1996 (21. 11. 96),<br>Claims 3, 4 (Family: none) | 1-26 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| June 17, 1998 (17. 06. 98) | June 30, 1998 (30. 06. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)